# EUROPÄISCHE PATENTSCHRIFT

(11) **EP 2 596 999 B1**
(45) Veröffentlichungstag und Bekanntmachung des Hinweises auf die Patenterteilung: **15.04.2020**
(21) Anmeldenummer: 12185573.8
(22) Anmeldetag: 24.09.2012
(51) Int. Cl.: B60S 1/38

(54) **Wischblattvorrichtung mit einem zumindest teilweise aus einem Faserverbundwerkstoff gebildeten Federkern**
Wiper blade device with a spring core at least partially formed from a fibre composite material
Dispositif de balais d'essuie-glace avec un noyau de ressort formé au moins en partie par une matière première composite en fibres

(30) Priorität: 22.11.2011 DE 102011086790
(43) Veröffentlichungstag der Anmeldung: 29.05.2013
(73) Patentinhaber: ROBERT BOSCH GMBH, 70442 Stuttgart (DE)
(72) Erfinder: Benner, Andreas, 104 Taipei (TW); Baumert, Stefan, 76139 Karlsruhe (DE); Pichler, Andreas, 76646 Bruchsal (DE); Obert, Mike, 76593 Gernsbach (DE)

(56) Entgegenhaltungen:
- DE-A1- 10 305 323
- DE-A1- 19 813 230
- DE-U1-212007 000 044
- FR-A1- 2 929 904
- US-A- 6 026 537

## Beschreibung

### Stand der Technik

Es ist bereits eine Wischblattvorrichtung eines gelenkfreien Wischblatts, die eine Federschiene umfasst, die einen aus einem Faserverbundwerkstoff gebildeten Federkern aufweist, und dazu vorgesehen ist, eine Wischkraft auf das Wischblatt zu übertragen, vorgeschlagen worden.

Als weiterer Stand der Technik ist die FR 2 929 004 A1 und die US 6,026,537 A bekannt geworden. DE-A-10305323 offenbart die Oberbegriffe der Ansprüche 1 und 8.

### Offenbarung der Erfindung

Die Erfindung geht aus von einer Wischblattvorrichtung eines gelenkfreien Wischblatts, die zumindest eine Federschiene umfasst, die zumindest einen zumindest teilweise aus einem Faserverbundwerkstoff gebildeten Federkern aufweist, und zumindest dazu vorgesehen ist, eine Wischkraft auf das Wischblatt zu übertragen.

Es wird vorgeschlagen, dass die Federschiene ein Federgehäuse umfasst, das den Federkern zumindest teilweise umschließt. Dadurch kann eine besonders vorteilhafte Federschiene aus einem Faserverbundwerkstoff bereitgestellt werden. Unter einem "gelenkfreien Wischblatt" soll insbesondere ein Wischblatt verstanden werden, das ein oder mehrere, insbesondere gebogene Federschienen aufweist und/oder insbesondere einen Wischgummi aufweist, der gelenkfrei, insbesondere über die Federschienen, mit einer Koppeleinheit, insbesondere einem Wischblattadapter, verbunden ist. Unter einer "Federschiene" soll insbesondere ein gekrümmtes Trägerelement verstanden werden, das eine Wischkraft von einem Wischarm auf den Wischgummi überträgt und durch seine Krümmung, die einen kleineren Krümmungsradius aufweist als eine zu wischende Kraftfahrzeugscheibe, den Wischgummi mit seiner Wischkante über seine gesamte Länge auf die Kraftfahrzeugscheibe drückt und so während eines Betriebs ein Abheben der Wischkante von der Kraftfahrzeugscheibe verhindert. Unter einem "Faserverbundwerkstoff" soll dabei insbesondere ein zumindest zwei Hauptkomponenten umfassender Mehrphasenwerkstoff verstanden werden, der zumindest eine bettende Matrix sowie verstärkende Fasern aufweist. Die bettende Matrix kann vorzugsweise aus einem Kunststoff, einem Harz und/oder einem weiteren, dem Fachmann als sinnvoll erscheinenden Material, und die Fasern können aus Kunststofffasern, Glasfasern, Naturfasern und/oder anderen, dem Fachmann als sinnvoll erscheinenden Fasern gebildet sein. Unter "vorgesehen" soll insbesondere speziell ausgelegt und/oder ausgestattet verstanden werden. Unter einem "Federgehäuse" soll insbesondere eine Ummantelung aus einem von dem Federkern zumindest teilweise verschiedenen Material, wie beispielsweise einem Kunststoff, einem Metall, wie insbesondere einem Leichtmetall, oder einem anderen, dem Fachmann als sinnvoll erscheinenden Material verstanden werden. Das Federgehäuse kann aus mehreren Bauteilen gebildet sein, ist jedoch vorzugsweise aus einem einzelnen Bauteil gebildet. Unter "zumindest teilweise umschließen" soll dabei insbesondere verstanden werden, dass der Federkern, in zumindest einer Schnittebene betrachtet, zumindest in drei Richtungen vollständig und in einer vierten Richtung zumindest zu 10 %, vorteilhaft zu 50 % und besonders vorteilhaft zu mindestens 80 % von dem Federgehäuse überdeckt ist. Der Federkern kann entlang seiner Längsrichtung nur in einem oder auch in mehreren Teilbereichen von dem Federgehäuse umschlossen sein. Besonders vorzugsweise ist der Federkern jedoch zumindest zum Großteil entlang seiner Längsrichtung von dem Federgehäuse umschlossen.

Weiter wird vorgeschlagen, dass das Federgehäuse der Federschiene zumindest einen Aufnahmebereich aufweist, der für eine formschlüssige Verbindung mit zumindest einem Wischblattbauteil vorgesehen ist. Dadurch kann das Wischblatt vorteilhaft einfach ausgestaltet werden und eine Verbindung der verschiedenen Wischblattbauteile besonders einfach und ohne zusätzliche Verbindungselemente realisiert werden. Unter einem "Aufnahmebereich" soll insbesondere ein Bereich der Federschiene verstanden werden, in dem zumindest ein Formschlusselement angeordnet ist, das zu einer formschlüssigen Verbindung zwischen dem Wischblattbauteil und dem Federgehäuse vorgesehen ist. Das zumindest eine Formschlusselement kann dabei von einem einen Aufnahmebereich ausbildenden Element gebildet sein, das in ein anderes Element eingreift, wie vorzugsweise von einem Steg, und/oder kann von einem Element gebildet sein, in das ein anderes Element eingreift, wie vorzugsweise von einer Nut. Unter einer "formschlüssigen Verbindung" soll dabei insbesondere eine Verbindung verstanden werden, bei der eine Haltekraft zwischen zwei Bauteilen durch einen geometrischen Eingriff der Bauteile ineinander übertragen wird.

Des Weiteren wird vorgeschlagen, dass das Federgehäuse der Federschiene zumindest eine Anlenkstelle für einen Wischblattadapter aufweist. Dadurch kann der Wischblattadapter besonders einfach mit dem Wischblatt verbunden werden, wodurch das Wischblatt insbesondere einfach und kostengünstig mit dem Wischarm verbindbar ist. Unter einer "Anlenkstelle für einen Wischblattadapter" soll dabei insbesondere eine Stelle der Federschiene verstanden werden, die dazu vorgesehen ist, dass der Wischblattadapter fest mit ihr verbunden werden kann, und dazu dementsprechend ausgebildet ist. Dabei kann die Anlenkstelle zumindest teilweise einstückig mit einem Aufnahmebereich für weitere Wischblattbauteile ausgebildet sein. Der Wischblattadapter kann über die Anlenkstelle dabei beispielsweise mittels einer Formschlussverbindung, einer Schweißverbindung, einer Nietverbindung und/oder einer anderen, dem Fachmann als sinnvoll erscheinenden Verbindung mit dem Federgehäuse verbunden sein. Unter einem "Wischblattadapter" soll in diesem Zusammenhang insbesondere ein Adapter verstanden werden, der eine Anlenkstelle zu dem Wischblatt aufweist, mit dem Wischblatt unverlierbar verbunden und dazu vorgesehen ist, einen Kopplungsbereich des Wischblatts für eine Kopplung und/oder Kontaktierung mit einem Wischarmadapter bereitzustellen. Unter einem "Wischarmadapter" soll in diesem Zusammenhang insbesondere ein Adapter verstanden werden, der einen Kontaktbereich zu dem Wischarm aufweist, mit dem Wischarm unverlierbar verbunden und dazu vorgesehen ist, einen Kopplungsbereich des Wischarms für eine Kopplung und/oder Kontaktierung mit einem Wischblattadapter bereitzustellen.

Zudem wird vorgeschlagen, dass das Federgehäuse als ein Strangpressprofil ausgebildet ist. Dadurch kann das Federgehäuse besonders einfach und kostengünstig hergestellt werden. Unter einem "Strangpressprofil" soll dabei insbesondere ein Bauteil verstanden werden, welches in einem Strangpressverfahren hergestellt ist und dadurch in Strangpressrichtung ein zumindest im Wesentlichen gleich bleibendes Profil aufweist. Dabei kann das Strangpressprofil aus einem Metall, insbesondere einem Leichtmetall, aus einem Kunststoff und/oder aus einem anderen, dem Fachmann als für ein Strangpressverfahren sinnvoll erscheinenden Material gebildet sein.

Nach der Erfindung wird vorgeschlagen, dass das Federgehäuse als ein Aluminium-Strangpressprofil ausgebildet ist. Dadurch kann das Federgehäuse besonders vorteilhaft ausgebildet werden. Unter einem "Aluminium-Strangpressprofil" soll insbesondere ein Bauteil aus Aluminium bzw. einer Aluminiumlegierung verstanden werden, das in einem Strangpressverfahren hergestellt ist.

Ferner wird vorgeschlagen, dass das Federgehäuse eine zumindest im Wesentlichen gleiche Krümmung aufweist wie der aus Faserverbundwerkstoffen hergestellte Federkern. Dadurch kann die Federschiene besonders einfach ausgestaltet werden. Unter einer "Krümmung" soll insbesondere eine Biegung in Längsrichtung des Wischblatts verstanden werden. Unter einer "im Wesentlichen gleichen Krümmung" soll dabei insbesondere verstanden werden, dass eine Krümmung des Federgehäuses, insbesondere ein Krümmungsradius, sich um maximal 10 %, vorteilhafterweise um maximal 5 % und besonders vorteilhaft um höchstens 1 % von einer Krümmung des Federkerns unterscheidet.

Es wird weiter vorgeschlagen, dass sämtliche Fasern des Federkerns zumindest zum Großteil unidirektional ausgerichtet sind. Dadurch kann der Federkern besonders einfach hergestellt werden und weist insbesondere vorteilhafte Eigenschaften auf. Unter "unidirektional ausgerichtet" soll insbesondere verstanden werden, dass die Fasern des Federkerns in unterschiedliche Richtungen willkürlich ausgerichtet sind.

Des Weiteren wird ein Verfahren zur Herstellung einer Wischblattvorrichtung vorgeschlagen, bei dem ein aus einem Faserverbundwerkstoff hergestellter Federkern unausgehärtet in ein Federgehäuse eingelegt wird. Dadurch kann der Federkern besonders einfach in das Federgehäuse integriert werden. Unter "unausgehärtet" soll insbesondere verstanden werden, dass ein Material der bettenden Matrix im Vergleich zu einem ausgehärteten Zustand wesentlich weicher und/oder weniger steif ist und/oder sich der Federkern zerstörungsfrei plastisch verformen lässt. Dabei soll unter "wesentlich" insbesondere um mehr als 10 % und besonders vorteilhaft um mehr als 20 % verstanden werden.

Ferner wird ein Verfahren vorgeschlagen, bei dem der in dem Federgehäuse angeordnete Federkern vor einem vollständigen Aushärten gebogen wird. Dadurch kann die Krümmung der Federschiene besonders einfach und kostengünstig erreicht werden. Unter einem "vollständigen Aushärten" soll insbesondere ein Zustand des Federkerns verstanden werden, bei dem der Faserverbundwerkstoff seine maximale Härte und Steifigkeit aufweist, da sich aus der bettenden Matrix, beispielsweise durch Zufuhr von Wärme, Flüssigkeiten verflüchtigen und die bettende Matrix so aushärtet.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Wischblatt mit einer erfindungsgemäßen Wischblattvorrichtung in einer schematischen Darstellung,
- Fig. 2: eine Schnittansicht des Wischblatts,
- Fig. 3: eine schematische Ansicht einer Federschiene mit einem montierten Wischgummi,
- Fig. 4: die Federschiene während eines Produktionsschritts und
- Fig. 5: das Wischblatt mit teilweise abgeschnittenem Spoilerelement und dargestellten Sicherungselementen.

### Beschreibung des Ausführungsbeispiels

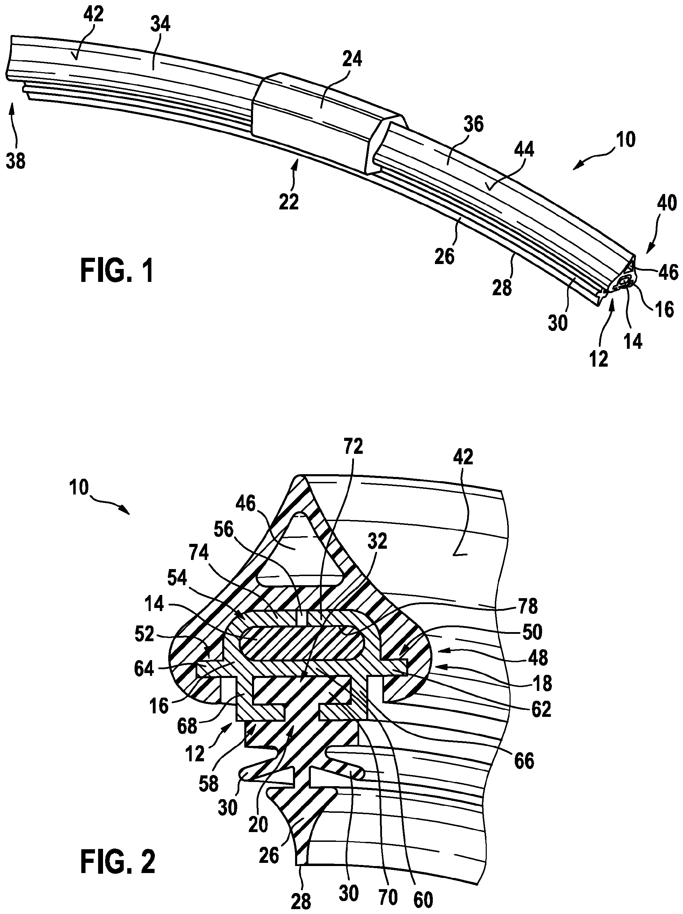

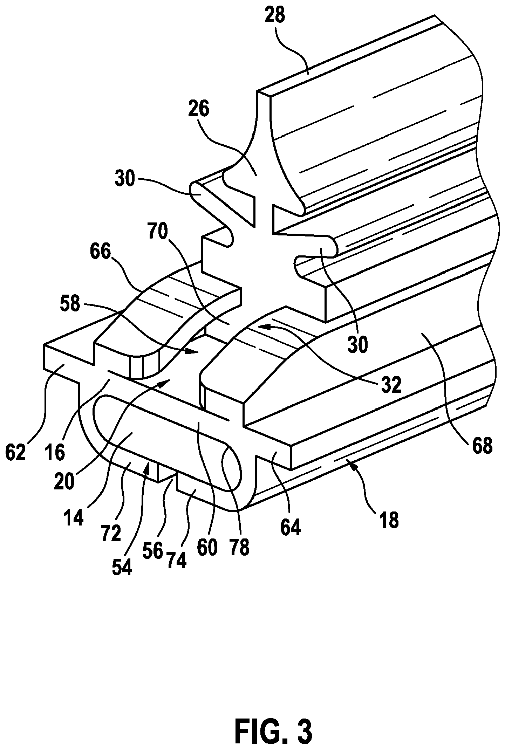

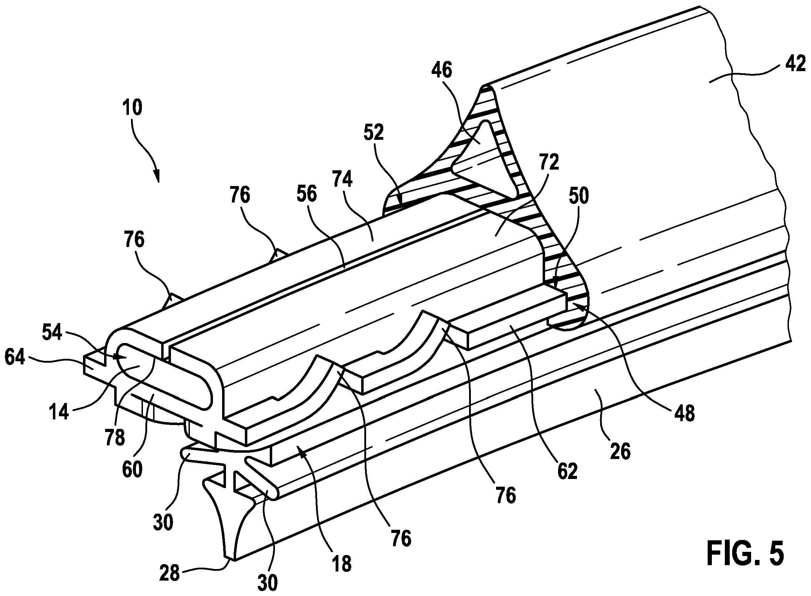

Die Figuren 1 bis 5 zeigen ein erfindungsgemäßes gelenkfreies Wischblatt 10 mit einer Wischblattvorrichtung in einer schematischen Darstellung. Das gelenkfreie Wischblatt 10 ist dazu vorgesehen, eine nicht näher dargestellte Kraftfahrzeugscheibe zu wischen und die Kraftfahrzeugscheibe dadurch von Schmutz und Wasser zu befreien. Die Kraftfahrzeugscheibe weist dabei vorzugsweise eine Krümmung auf. Eine Längsrichtung des Wischblatts 10 verläuft koaxial zu einer Haupterstreckungsrichtung des Wischblatts 10. Eine Querrichtung des Wischblatts 10 ist orthogonal zu der Längsrichtung und parallel zu einer Wischrichtung des Wischblatts 10 ausgerichtet. Das gelenkfreie Wischblatt 10 ist aus mehreren Wischblattbauteilen zusammengesetzt. Das Wischblatt 10 umfasst einen Wischblattadapter 24. Der Wischblattadapter 24 ist fest und verliersicher mit dem Wischblatt 10 verbunden. Dabei ist es sowohl denkbar, dass der Wischblattadapter 24 fest und mechanisch zerstörungsfrei trennbar mit dem Wischblatt 10 verbunden ist, als auch, dass der Wischblattadapter 24 fest und zerstörungsfrei untrennbar mit dem Wischblatt 10 verbunden ist. Der Wischblattadapter 24 kann dabei aus einem Kunststoff, einem Metall und/oder einem anderen, dem Fachmann als sinnvoll erscheinenden Material gebildet sein. Mittels des Wischblattadapters 24 kann das Wischblatt 10 mechanisch trennbar mit einem nicht näher dargestellten Wischarm verbunden werden. Dazu weist der Wischarm, der mittels eines Wischermotors in einer Schwenkbewegung antreibbar ist, einen nicht näher dargestellten Wischarmadapter auf. Der Wischarmadapter ist an einem Ende des Wischarms angebracht, das einem Ende des Wischarms gegenüberliegt, das fest mit dem Wischermotor verbunden ist. Der Wischarmadapter ist fest mit dem Wischarm verbunden. Der Wischblattadapter 24 und der Wischarmadapter sind durch nicht näher dargestellte, korrespondierend ausgebildete Koppelelemente, die sich jeweils in dem Wischarmadapter und dem Wischblattadapter 24 befinden, trennbar miteinander verbunden. Grundsätzlich ist es dabei denkbar, dass die Koppelelemente über einen Formschluss, einen Kraftschluss oder eine Kombination aus Form- und Kraftschluss trennbar miteinander verbunden sind.

Zur Auflage auf der Kraftfahrzeugscheibe weist das Wischblatt 10 einen Wischgummi 26 auf. Der Wischgummi 26 weist eine längliche Ausdehnung auf, die entlang einer Haupterstreckungsrichtung des gesamten Wischblatts 10 orientiert ist. Der Wischgummi 26 weist eine Wischkante 28 auf. Mit der Wischkante 28 liegt der Wischgummi 26 in einem voll montierten Zustand an der zu wischenden, gewölbten Kraftfahrzeugscheibe an. Die Wischkante 28 ist pfeilförmig ausgebildet, wobei ein spitz zulaufendes Ende der Wischkante 28 in montiertem Zustand der Kraftfahrzeugscheibe zugewandt ist und auf dieser aufliegt. Die Wischkante 28 des Wischgummis 26 weist an einer, dem spitz zulaufenden Ende abgewandten Seite seitliche Stege 30 auf, die während eines Wischvorgangs ebenfalls auf der Kraftfahrzeugscheibe anliegen können, um die Kraftfahrzeugscheibe effektiver zu wischen. Grundsätzlich ist es auch denkbar, dass die Wischkante 28 anders ausgestaltet ist und beispielsweise keine oder mehr seitliche Stege 30 aufweist. Der Wischgummi 26 weist weiter einen Anbindungsbereich 32 auf. Der Anbindungsbereich 32 ist an einem, der Wischkante 28 gegenüberliegenden, in montiertem Zustand der Kraftfahrzeugscheibe abgewandten Ende des Wischgummis 26 angeordnet. Der Anbindungsbereich 32 weist ein T-förmiges Formschlusselement 70 auf. Mittels des T-förmigen Formschlusselements 70 des Anbindungsbereichs 32 ist der Wischgummi 26 mit einem weiteren Wischblattbauteil bzw. mit dem Wischblatt 10 verbindbar.

Als weiteres Wischblattbauteil umfasst das Wischblatt 10 zwei Spoilerelemente 34, 36. Die Spoilerelemente 34, 36 sind dazu vorgesehen, das Wischblatt 10 aerodynamisch vorteilhaft zu beeinflussen. Dazu sind die Spoilerelemente 34, 36 auf einer dem Wischgummi 26 abgewandten Seite des Wischblatts 10 angebracht. Das eine Spoilerelement 34 reicht von einem Innenkreis 38 des Wischblatts 10 bis an den Wischblattadapter 24. Das zweite Spoilerelement 36 reicht von einem Außenkreis 40 des Wischblatts 10 bis an den Wischblattadapter 24. Grundsätzlich ist es auch denkbar, dass die Spoilerelemente 34, 36 sich nur über einen Teil der Länge zwischen dem Wischblattadapter 24 und dem Außenkreis 40 bzw. dem Innenkreis 38 des Wischblatts 10 erstrecken. Die Spoilerelemente 34, 36 weisen jeweils eine Windabweiserfläche 42, 44 auf. Die Windabweiserflächen 42, 44 sind in montiertem Zustand in Richtung einer Motorhaube gerichtet. Über die Windabweiserflächen 42, 44 werden die Spoilerelemente 34, 36 während einer Fahrt von dem darüber streifenden Fahrtwind in Richtung der Kraftfahrzeugscheibe gedrückt, wodurch ein Abheben des Wischblatts 10 bei höheren Geschwindigkeiten verhindert werden kann. Die Spoilerelemente 34, 36 sind aus einem weichen Kunststoff gefertigt, wodurch sie in ihrer Längsrichtung eine geringe Biegesteifigkeit aufweisen, wodurch sie zumindest in Längsrichtung leicht biegbar sind. Die Spoilerelemente 34, 36 weisen des Weiteren jeweils eine Hohlkammer 46 auf, die in Längsrichtung jeweils von einem Ende des Spoilerelements 34, 36 bis zu einem gegenüberliegenden Ende des Spoilerelements 34, 36 reicht, wodurch die Biegesteifigkeit der Spoilerelemente 34, 36 vorteilhaft verringert werden kann. An einer der Kraftfahrzeugscheibe in montiertem Zustand zugewandten Seite weisen die Spoilerelemente 34, 36 jeweils einen Anbindungsbereich 48 auf, über den sie jeweils an das Wischblatt 10 angebunden werden können. Der Anbindungsbereich 48 umfasst zwei Formschlusselemente 50, 52. Die Formschlusselemente 50, 52 sind jeweils von den Wandungen einer Nut begrenzt. Die Formschlusselemente 50, 52 der Spoilerelemente 34, 36 verlaufen jeweils in Längsrichtung und sind für einen Formschluss mit einem korrespondierenden Formschlusselement vorgesehen.

Zur Übertragung einer Wischkraft auf das gesamte Wischblatt 10 weist die Wischblattvorrichtung des Wischblatts 10 eine Federschiene 12 auf. Die Federschiene 12 weist entlang ihrer Längsachse, die parallel zu ihrer Haupterstreckungsrichtung liegt, eine Krümmung auf. Die Krümmung der Federschiene 12 ist größer als die größte Krümmung der zu wischenden Kraftfahrzeugscheibe. Zur Bereitstellung einer Federkraft weist die Federschiene 12 einen Federkern 14 auf. Der Federkern 14 besteht aus einem, aus einem Faserverbundwerkstoff hergestellten Faserstrang. Der Federkern 14 weist unidirektional angeordnete Fasern auf, die in ihrer Ausrichtung willkürlich in dem Faserstrang angeordnet sind. Die Fasern werden von Kunststofffasern gebildet und sind in eine Matrix eingebettet, die zumindest teilweise aus Harz hergestellt ist.

Zur Armierung des Federkerns 14 umfasst die Federschiene 12 ein Federgehäuse 16. Das Federgehäuse 16 ist als ein Strangpressprofil ausgebildet. Das als Strangpressprofil ausgebildete Federgehäuse 16 ist aus einem Aluminium bzw. einer Aluminiumlegierung gebildet. Das Federgehäuse 16 weist entlang der Längsachse der Federschiene 12 eine Länge auf, die zumindest genau so groß ist wie eine Länge des Federkerns 14. Es ist auch denkbar, dass die Länge des Federgehäuses 16 länger ist als die Länge des Federkerns 14. Das Federgehäuse 16 weist eine im Wesentlichen gleiche Krümmung auf wie der aus Faserverbundwerkstoffen hergestellte Federkern 14. Zur Aufnahme des Federkerns 14 weist das Federgehäuse 16 eine Federkernaufnahme 54 auf. Die Federkernaufnahme 54 ist an einer Oberseite des Federgehäuses 16 angeordnet, die in montiertem Zustand der Kraftfahrzeugscheibe bzw. dem Wischgummi 26 abgewandt ist. Die Federkernaufnahme 54 weist zwei stegartige, sich über die Längsrichtung des Federgehäuses 16 erstreckende Wandungen 72, 74 auf, die eine Hohlkammer 78 begrenzen. Die Hohlkammer 78 reicht von einem Ende des Federgehäuses 16 in Längsrichtung bis an ein dem einen Ende gegenüberliegendes Ende des Federgehäuses 16. Die Hohlkammer 78 ist an den Enden in Längsrichtung geöffnet. Grundsätzlich ist es auch denkbar, dass die Hohlkammer 78 an den Enden in Längsrichtung durch ein dem Fachmann als sinnvoll erscheinendes Verfahren, beispielsweise ein Biegeverfahren, zumindest teilweise oder vollständig geschlossen ist. Eine die Hohlkammer 78 begrenzende Kontur der Federkernaufnahme 54 ist, in einem Querschnitt betrachtet, in etwa rechteckig, wobei Ecken der Kontur jeweils durch einen Radius gebildet sind. Grundsätzlich sind auch andere Konturen, beispielsweise eine ovale oder kreisförmige Kontur, denkbar. In einem montierten Zustand ist der Federkern 14 in der Hohlkammer 78 der Federschiene 12 angeordnet. An der Oberseite weist das Federgehäuse 16 einen einem Fertigungsverfahren der Federschiene 12 geschuldeten Spalt 56 auf. Dadurch ist die Hohlkammer 78 nach oben hin um diesen Spalt 56 geöffnet. Das Federgehäuse 16 der Federschiene 12 umschließt den Federkern 14 damit teilweise. Das Federgehäuse 16 umschließt die Federschiene 12 in drei Richtungen komplett und an der Oberseite aufgrund des Spalts 56 nur teilweise. Grundsätzlich ist es aber auch denkbar, dass die Federschiene 12 an ihrer Oberseite geschlossen ausgebildet ist und die Hohlkammer 78 der Federkernaufnahme 54 den Federkern 14 zumindest in vier Richtungen völlig umschließt.

Zur Aufnahme der Spoilerelemente 34, 36 weist das Federgehäuse 16 der Federschiene 12 einen ersten Aufnahmebereich 18 auf. Der erste Aufnahmebereich 18 ist zumindest für eine formschlüssige Anbindung der Spoilerelemente 34, 36 vorgesehen. Der Aufnahmebereich 18 ist von einer Grundplatte 60 des Federgehäuses 16 gebildet. Auf einer in montiertem Zustand dem Wischgummi 26 und der Kraftfahrzeugscheibe abgewandten Seite der Grundplatte 60 des Federgehäuses 16 ist die Federkernaufnahme 54 angeordnet. Die Grundplatte 60 steht seitlich, und zwar quer zur Längsrichtung der Federschiene 12, über die Federkernaufnahme 54 hinaus. Dadurch bildet die Grundplatte 60 jeweils auf einer der Längsseiten ein als Steg ausgebildetes Formschlusselement 62, 64 aus. Die Formschlusselemente 62, 64 sind korrespondierend zu den Formschlusselementen 50, 52 der Spoilerelemente 34, 36 ausgebildet. Im montierten Zustand sind die als Stege ausgebildeten Formschlusselemente 62, 64 des Federgehäuses 16 in den Formschlusselementen 50, 52 der Spoilerelemente 34, 36 angeordnet. Die Spoilerelemente 34, 36 umschließen mittels ihrer Formschlusselemente 50, 52 die als Stege ausgebildeten Formschlusselemente 62, 64 des Federgehäuses 16.

Zur Verliersicherung der Spoilerelemente 34, 36 weist der erste Aufnahmebereich Sicherungselemente 76 auf. Die Sicherungselemente 76 sind als Krallen ausgebildet, die in die als Stege ausgebildeten Formschlusselemente 62, 64 des Federgehäuses 16 eingebracht sind. Dazu sind die als Stege ausgebildeten Formschlusselemente 62, 64 in einem Teilbereich eingeschnitten und in einer Einschubrichtung der Spoilerelemente 34, 36 ausgebogen. Die als Krallen ausgebildeten Sicherungselemente 76 werden bei einer Montage der Spoilerelemente 34, 36 überdrückt und schnappen in eine dazu vorgesehene Ausnehmung in den Spoilerelementen 34, 36 ein, sobald die Spoilerelemente 34, 36 in einer Endposition angekommen sind. Dadurch sind die Spoilerelemente 34, 36 verliersicher auf dem Federgehäuse 16 angeordnet. Grundsätzlich ist es denkbar, dass die Sicherungselemente 76 in einer anderen, dem Fachmann als sinnvoll erscheinenden Form ausgestaltet sind und beispielsweise als separate Bauteile ausgebildet sind. Grundsätzlich ist es auch denkbar, dass der erste Aufnahmebereich 18 ohne Sicherungselemente 76 ausgebildet ist.

Zur Aufnahme des Wischgummis 26 weist das Federgehäuse 16 der Federschiene 12 einen zweiten Aufnahmebereich 20 auf. Der zweite Aufnahmebereich 20 ist zumindest zur formschlüssigen Anbindung des Wischgummis 26 vorgesehen. Der zweite Aufnahmebereich 20 ist an einer in montiertem Zustand der Kraftfahrzeugscheibe bzw. dem Wischgummi 26 zugewandten Seite der Grundplatte 60 des Federgehäuses 16 angeordnet. Der Aufnahmebereich 20 umfasst ein Formschlusselement 58, das zwei Wandelemente 66, 68 umfasst. Die Wandelemente 66, 68 erstrecken sich in Längsrichtung. Die zwei Wandelemente 66, 68 erstrecken sich jeweils von der Grundplatte 60 aus in eine, dem ersten Aufnahmebereich 18 abgewandte Richtung. Die Wandelemente 66, 68 stehen jeweils orthogonal zu der Grundplatte 60. In einem gleichen Abstand von der Grundplatte 60 weisen die Wandelemente 66, 68 jeweils einen 90-Grad-Knick nach innen auf. Endstücke der Wandelemente 66, 68 sind dabei einander zugewandt und erstrecken sich jeweils in Richtung des anderen Wandelements 66, 68. Die Wandelemente 66, 68 enden in einem Abstand voneinander, der mehrere mm beträgt. Der Spalt zwischen den Endstücken der Wandelemente 66, 68 ist so groß, dass ein schmaler Teil des T-förmigen Formschlusselements 70 des Anbindungsbereichs 32 des Wischgummis 26 in einem montierten Zustand darin angeordnet werden kann. Durch die abgeknickten Wandelemente 66, 68 ist eine T-Nut ausgebildet, die in Bezug auf eine Querrichtung des Wischblatts 10 mittig angeordnet ist. In einem montierten Zustand ist das T-förmige Formschlusselement 70 des Anbindungsbereichs 32 des Wischgummis 26 in dem von den Wandelementen 66, 68 ausgebildeten Formschlusselement 58 des zweiten Aufnahmebereichs 20 des Federgehäuses 16 angeordnet. Die Federschiene 12 ist dadurch formschlüssig mit dem Federgehäuse 16 und damit mit der Federschiene 12 verbunden. An den Enden des Federgehäuses 16 ist in Längsrichtung jeweils der nach innen gebogene Teil der Wandelemente 66, 68 in montiertem Zustand jeweils in Richtung der Grundplatte 60 gebogen. Dadurch kann ein Lösen der formschlüssigen Verbindung zwischen dem Federgehäuse 16 und dem Wischgummi 26, also ein Herausrutschen des T-förmigen Formschlusselements 70 des Anbindungsbereichs 32 des Wischgummis 26 aus dem von den Wandelementen 66, 68 ausgebildeten Formschlusselement 58 des zweiten Aufnahmebereichs 20 des Federgehäuses 16, verhindert werden.

Zur Anbindung des Wischblattadapters 24 weist das Federgehäuse 16 der Federschiene 12 eine Anlenkstelle 22 für den Wischblattadapter 24 auf. Die Anlenkstelle 22 für den Wischblattadapter 24 ist teilweise einstückig mit den Formschlusselementen 62, 64 des ersten Aufnahmebereichs 18 des Federgehäuses 16 ausgebildet. Die als Stege ausgebildeten Formschlusselemente 62, 64 sind ebenfalls dazu vorgesehen, formschlüssig mit dem Wischblattadapter 24 verbunden zu werden. Dazu weist der Wischblattadapter 24, gleich wie die Spoilerelemente 34, 36, nicht näher dargestellte Formschlusselemente auf, die in montiertem Zustand in die als Stege ausgebildeten Formschlusselemente 62, 64 des ersten Aufnahmebereichs 18 des Federgehäuses 16 eingreifen. Zur genauen Positionierung des Wischblattadapters 24 auf dem Federgehäuse 16 bzw. der Federschiene 12 weist die Anlenkstelle 22 nicht näher dargestellte Positionierungselemente auf. Die Positionierungselemente sind dazu vorgesehen, mit korrespondierenden Positionierungselementen in dem Wischblattadapter 24 zu korrespondieren und in einem montierten Zustand ineinander einzugreifen. Die Positionierungselemente der Anlenkstelle 22 des Federgehäuses 16 sind als Ausnehmungen oder Schlitze, die durch ein Stanzverfahren in das Federgehäuse 16 eingebracht sind, ausgebildet.

Der Wischblattadapter 24 ist über die Anlenkstelle 22 fest und verliersicher mit dem Federgehäuse 16 verbunden. Grundsätzlich sind verschiedene, von einem Material und einer Ausgestaltung des Wischblattadapters 24 abhängige Anbindungsverfahren denkbar, mit denen der Wischblattadapter 24 fest mit dem Federgehäuse 16 der Federschiene 12 verbunden werden kann.

Ist der Wischblattadapter 24 aus einem Kunststoff gebildet, ist es denkbar, dass der Wischblattadapter 24 mittels eines Formschlusses durch ein oder mehrere Rastelemente fest und mechanisch trennbar mit dem Federgehäuse 16 verbindbar ist. Eine weitere Möglichkeit ist es, den Wischblattadapter 24 mittels eines Warmprägeverfahrens durch entsprechende Zapfen an dem Wischblattadapter 24 und dazu korrespondierend ausgebildeten Ausnehmungen in dem Federgehäuse 16 fest und zerstörungsfrei untrennbar mit dem Federgehäuse 16 zu verbinden. Des Weiteren sind außerdem ein Schweiß- oder Klebeverfahren zur festen Verbindung des Wischblattadapters 24 mit dem Federgehäuse 16 denkbar.
Ist der Wischblattadapter 24 aus einem Metall gebildet, ist es denkbar, dass der Wischblattadapter 24 durch Aufspreizen, Nieten, Stauchen oder Biegen entsprechender Zapfen des Wischblattadapters 24, die in entsprechende Aussparungen des Federgehäuses 16 gesteckt sind, fest und zerstörungsfrei unverlierbar mit dem Federgehäuse 16 verbunden wird. Des Weiteren ist es ebenfalls denkbar, dass der Wischblattadapter 24, durch ein beliebiges, dem Fachmann als sinnvoll erscheinendes Schweißverfahren fest mit dem Federgehäuse 16 der Federschiene 12 verbunden ist. Zusätzlich ist ebenfalls eine Klebeverbindung, eine Falzverbindung, eine Läppverbindung, eine Schränkverbindung oder eine Stemmverbindung als feste Verbindung des Wischblattadapters 24 mit der Federschiene 12 denkbar. Grundsätzlich kann der Wischblattadapter 24 auch frei von Formschlusselementen ausgebildet sein, die in die Formschlusselemente 62, 64 der Anlenkstelle 22 bzw. des ersten Aufnahmebereichs 18 eingreifen.

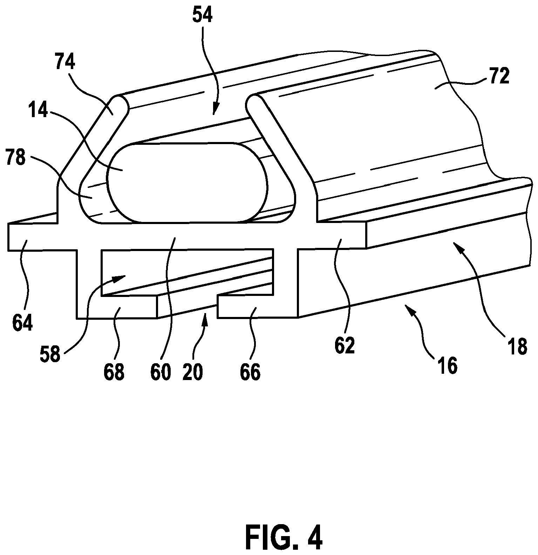

Figur 4 zeigt einen Verfahrensschritt des Herstellungsverfahrens der erfindungsgemäßen Federschiene 12. Die Hohlkammer 78 der Federkernaufnahme 54 des Federgehäuses 16 ist geöffnet. Dazu sind Wandungen 72, 74 des Federgehäuses 16, die die Hohlkammer 78 ausbilden, nach oben von der Grundplatte 60 des Federgehäuses 16 weg gebogen. Das Federgehäuse 16 wird mit geöffneter Hohlkammer 78 als Strangpressprofil hergestellt. Das Strangpressprofil ist dabei gerade ausgebildet und weist insbesondere keine Krümmung entlang seiner Längsachse auf.

In einem nächsten Verfahrensschritt wird der aus dem Faserverbundwerkstoff bestehende Federkern 14 in die geöffnete Hohlkammer 78 eingelegt. Ist der Federkern 14 in die Hohlkammer 78 eingelegt, werden die Wandungen 72, 74 des Federgehäuses 16 nach innen umgeklappt und die Hohlkammer 78 der Federkernaufnahme 54 geschlossen. Aus fertigungstechnischen Gründen kann dabei der kleine Spalt 56 zwischen den umgebogenen Wandungen 72, 74 des Federgehäuses 16 erhalten bleiben. Der Federkern 14 ist schon mit Harz getränkt in die Hohlkammer 78 eingelegt. Grundsätzlich ist es möglich, dass der Federkern 14 trocken in die Hohlkammer 78 eingelegt wird und vor einem Schließen der Hohlkammer 78 mit Harz getränkt wird oder dass der Federkern 14 trocken in die Hohlkammer 78 eingelegt wird und erst nach dem Schließen der Hohlkammer 78 mit Harz getränkt wird. Grundsätzlich ist es ebenfalls denkbar, dass der Federkern 14 zumindest teilweise aus einem Pre-Preg-Material besteht und durch Eintrag von Wärme und/oder Druck zum Aushärten angeregt wird.
In einem darauf folgenden Verfahrensschritt wird das Federgehäuse 16, mit dem in der Hohlkammer 78 eingelegten Federkern 14 vor dessen Aushärten in einer gewünschten Länge abgeschnitten. Danach wird das zurechtgeschnittene Federgehäuse 16 in seiner Längsrichtung gebogen. Dadurch wird die gewünschte Krümmung der Federschiene 12 erreicht. Das Federgehäuse 16 wird so weit gebogen, dass das Federgehäuse 16 bzw. die Federschiene 12 eine größere Krümmung aufweist als die Kraftfahrzeugscheibe, die von dem mit der Federschiene 12 ausgestatteten Wischblatt 10 gewischt werden soll. Nach dem Biegen des Federgehäuses 16 härtet der Federkern 14 mit der entsprechenden Krümmung in der Hohlkammer 78 aus. Nach dem Aushärten des Federkerns 14 ist die Federschiene 12 fertig für einen Zusammenbau des gesamten Wischblatts 10. Grundsätzlich ist es noch denkbar, dass die Hohlkammer 78 in einem Verfahrensschritt, entweder vor oder nach dem Biegen, an den Enden des Federgehäuses 16 in Längsrichtung, an denen die Hohlkammer 78 noch geöffnet ist, durch ein, dem Fachmann als sinnvoll erscheinendes Verfahren, beispielsweise durch ein Biegeverfahren, zumindest teilweise oder komplett verschlossen wird.

Für einen Zusammenbau des Wischblatts 10 wird der Wischgummi 26 mit seinem T-förmigen Formschlusselement 70 in Längsrichtung in das Formschlusselement 58 des Federgehäuses 16 eingezogen. Danach wird das Formschlusselement 58 des Federgehäuses 16 an den Enden des Federgehäuses 16 in Längsrichtung dauerhaft in Richtung der Grundplatte 60 gebogen. Der Wischgummi 26 weist in Längsrichtung zu den umgebogenen Enden des Formschlusselements 58 ein Spiel auf, wodurch ein Quellverhalten und Temperaturausdehnungen des Wischgummis 26 berücksichtigt werden.

In einem weiteren Montageschritt wird der Wischblattadapter 24 über seine Anlenkstelle 22 in einem der oben beschriebenen Verbindungsverfahren mit dem Federgehäuse 16 der Federschiene 12 fest verbunden. Danach können die Spoilerelemente 34, 36 mit ihren Formschlusselementen 50, 52 in Längsrichtung in die dafür vorgesehenen Formschlusselemente 62, 64 des ersten Aufnahmebereichs 18 der Federschiene 12 eingeschoben werden. Als Abschluss können an die Enden des Wischblatts 10 in Längsrichtung nicht näher dargestellte Endkappen angebracht werden, die das Wischblatt 10 abschließen.

## Patentansprüche

1. Wischblattvorrichtung eines gelenkfreien Wischblatts (10), die zumindest eine Federschiene (12) umfasst, die zumindest einen zumindest teilweise aus einem Faserverbundwerkstoff gebildeten Federkern (14) aufweist, und zumindest dazu vorgesehen ist, eine Wischkraft auf das Wischblatt (10) zu übertragen, **dadurch gekennzeichnet, dass** die Federschiene (12) ein Federgehäuse (16) umfasst, das den Federkern (14) zumindest teilweise umschließt und das Federgehäuse (16) als ein Aluminium-Strangpressprofil ausgebildet ist.

2. Wischblattvorrichtung nach Anspruch 1, **dadurch gekennzeichnet, dass** das Federgehäuse (16) der Federschiene (12) zumindest einen Aufnahmebereich (18, 20) aufweist, der für eine formschlüssige Verbindung mit zumindest einem Wischblattbauteil vorgesehen ist.

3. Wischblattvorrichtung nach Anspruch 1 oder 2, **dadurch gekennzeichnet, dass** das Federgehäuse (16) der Federschiene (12) zumindest eine Anlenkstelle (22) für einen Wischblattadapter (24) aufweist.

4. Wischblattvorrichtung nach einem der vorhergehenden Ansprüche, **dadurch gekennzeichnet, dass** das Federgehäuse (16) als ein Strangpressprofil ausgebildet ist.

5. Wischblattvorrichtung nach einem der vorhergehenden Ansprüche, **dadurch gekennzeichnet, dass** das Federgehäuse (16) eine zumindest im Wesentlichen gleiche Krümmung aufweist wie der Federkern (14).

6. Wischblattvorrichtung nach einem der vorhergehenden Ansprüche, **dadurch gekennzeichnet, dass** sämtliche Fasern des Federkerns (14) zumindest zum Großteil unidirektional ausgerichtet sind.

7. Wischblatt mit einer Wischblattvorrichtung nach einem der vorhergehenden Ansprüche.

8. Verfahren zur Herstellung einer Wischblattvorrichtung eines gelenkfreien Wischblatts (10), die zumindest eine Federschiene (12) umfasst, die zumindest einen zumindest teilweise aus einem Faserverbundwerkstoff gebildeten Federkern (14) aufweist, und zumindest dazu vorgesehen ist, eine Wischkraft auf das Wischblatt (10) zu übertragen, **dadurch gekennzeichnet, dass** die Federschiene (12) ein Federgehäuse (16) umfasst, das den Federkern (14) zumindest teilweise umschließt, wobei der aus einem Faserverbundwerkstoff hergestellter Federkern (14) unausgehärtet in das Federgehäuse (16) eingelegt wird.

9. Verfahren nach Anspruch 9, **dadurch gekennzeichnet, dass** der in dem Federgehäuse (16) angeordnete Federkern (14) vor einem vollständigen Aushärten gebogen wird.

## Claims

1. Wiper blade device of a joint-free wiper blade (10), said wiper blade device comprising at least one spring bar (12) which has at least one spring core (14) at least partially formed of a fibre composite material, and at least being provided to transmit a wiping force onto the wiper blade (10), **characterized in that** the spring bar (12) comprises a spring housing (16) which at least partially encloses the spring core (14), and the spring housing (16) is configured as an extruded aluminium profile.

2. Wiper blade device according to Claim 1, **characterized in that** the spring housing (16) of the spring bar (12) has at least one receiving region (18, 20) which is provided for a positively locking connection to at least one wiper blade component.

3. Wiper blade device according to Claim 1 or 2, **characterized in that** the spring housing (16) of the spring bar (12) has at least one attachment point (22) for a wiper blade adapter (24).

4. Wiper blade device according to one of the preceding claims, **characterized in that** the spring housing (16) is configured as an extruded profile.

5. Wiper blade device according to one of the preceding claims, **characterized in that** the spring housing (16) has at least substantially the same curvature as the spring core (14).

6. Wiper blade device according to one of the preceding claims, **characterized in that** all fibres of the spring core (14) are at least for the most part oriented in a unidirectional manner.

7. Wiper blade having a wiper blade device according to one of the preceding claims.

8. Method for producing a wiper blade device of a joint-free wiper blade (10), said wiper blade device comprising at least one spring bar (12) which has at least one spring core (14) at least partially formed of a fibre composite material, and at least being provided to transmit a wiping force onto the wiper blade (10), **characterized in that** the spring bar (12) comprises a spring housing (16) which at least partially encloses the spring core (14), wherein the spring core (14) produced from a fibre composite material is inserted, in the uncured state, into the spring housing (16).

9. Method according to Claim 9, **characterized in that** the spring core (14) arranged in the spring housing (16) is bent prior to complete curing.

## Revendications

1. Dispositif de balais d'essuie-glace d'un balai d'essuie-glace (10) sans articulation comprenant au moins un rail sur ressort (12) qui comporte au moins un cœur de ressort (14) formé au moins en partie à partir d'une matière composite en fibres et au moins prévu pour transmettre une force d'essuyage au balai d'essuie-glace (10), **caractérisé en ce que** le rail sur ressort (12) comprend un carter de ressort (16) englobant au moins en partie le cœur de ressort (14) et que le carter de ressort (16) est réalisé sous la forme d'un profilé extrudé en aluminium.

2. Dispositif de balais d'essuie-glace selon la revendication 1, **caractérisé en ce que** le carter de ressort (16) du rail sur ressort (12) comporte au moins une zone de logement (18, 20) qui est prévue pour une liaison par complémentarité de formes avec au moins un composant de balai d'essuie-glace.

3. Dispositif de balais d'essuie-glace selon la revendication 1 ou 2, **caractérisé en ce que** le carter de ressort (16) du rail sur ressort (12) comporte au moins un point d'articulation (22) pour un adaptateur de balai d'essuie-glace (24).

4. Dispositif de balais d'essuie-glace selon l'une quelconque des revendications précédentes, **caractérisé en ce que** le carter de ressort (16) est réalisé sous la forme d'un profilé extrudé.

5. Dispositif de balais d'essuie-glace selon l'une quelconque des revendications précédentes, **caractérisé en ce que** le carter de ressort (16) comporte une courbure au moins pour l'essentiel égale à celle du cœur de ressort (14) .

6. Dispositif de balais d'essuie-glace selon l'une quelconque des revendications précédentes, **caractérisé en ce que** l'ensemble des fibres du cœur de ressort (14) sont orientées au moins en grande partie unidirectionnellement.

7. Balai d'essuie-glace doté d'un dispositif de balais d'essuie-glace selon l'une quelconque des revendications précédentes.

8. Procédé de fabrication d'un dispositif de balais d'essuie-glace d'un balai d'essuie-glace (10) sans articulation comprenant au moins un rail sur ressort (12) qui comporte au moins un cœur de ressort (14) formé au moins en partie à partir d'une matière composite en fibres et au moins prévu pour transmettre une force d'essuyage au balai d'essuie-glace (10), **caractérisé en ce que** le rail sur ressort (12) comprend un carter de ressort (16) englobant au moins en partie le cœur de ressort (14), le cœur de ressort (14) fabriqué à partir d'une matière composite en fibres étant inséré avant d'avoir durci dans le carter de ressort (16).

9. Procédé selon la revendication 9, **caractérisé en ce que** le cœur de ressort (14) disposé dans le carter de ressort (16) est incurvé avant d'avoir entièrement durci.
